# EUROPÄISCHE PATENTSCHRIFT

(11) **EP 2 540 440 B1**
(45) Veröffentlichungstag und Bekanntmachung des Hinweises auf die Patenterteilung: **26.03.2014**
(21) Anmeldenummer: 12171886.0
(22) Anmeldetag: 13.06.2012
(51) Int. Cl.: B23Q 9/00

(54) **Schleifvorrichtung mit einer Handhabungsvorrichtung für ein eigenständiges und separat verwendbares Schleifgerät**
grinding tool with a handling device for an independent and separately used grinding tool
dispositif de ponçage avec un dispositif de manipulation pour meuleuse autonome et utilisable séparément

(30) Priorität: 29.06.2011 DE 202011103202 U
(43) Veröffentlichungstag der Anmeldung: 02.01.2013
(73) Patentinhaber: Janser GmbH, 71139 Ehningen (DE)
(72) Erfinder: Komander, Andreas, 71139 Ehningen (DE)
(74) Vertreter: Patentanwälte Ruff, Wilhelm, Beier, Dauster & Partner

(56) Entgegenhaltungen:
- WO-A1-2005/011915
- DE-A1-102007 020 199

## Beschreibung

### Anwendungsgebiet und Stand der Technik

Die Erfindung betrifft eine Schleifvorrichtung gemäß dem Oberbegriff des Anspruchs 1, wie z.B. aus der WO-A-2005/011915 bekannt.

Im Stand der Technik sind Handhabungsvorrichtungen für Schleifgeräte zum Bearbeiten von Bodenbelägen bekannt. Derartige Schleifgeräte weisen im Allgemeinen eine tellerförmige Schleifscheibe auf, die mit einem Elektromotor angetrieben wird. An solchen Vorrichtungen ist ein Gestänge für die Handhabung dieser Schleifgeräte vorgesehen, so dass eine stehende Bedienperson diese Schleifvorrichtung über einen zu bearbeitenden Bodenbelag führen kann. Besonders geeignet sind die aus dem Stand der Technik bekannten Handhabungsvorrichtungen mit dem Schleifgerät für die Bearbeitung von großen Flächen. Da die Schleifteller vergleichsweise groß sind, entstehen große seitlich wirkende Fliehkräfte, so dass die bekannten Handhabungsvorrichtungen nur wenig geeignet für Randbereiche der zu bearbeitenden Bodenbeläge sind. Des Weiteren zeichnet die bekannten Handhabungsvorrichtungen aus, dass diese als ein komplettes, vollständiges Gerät konzipiert sind, die ausschließlich für die Bearbeitung von Bodenbelägen vorgesehen sind.

### Aufgabe und Lösung

Der Erfindung liegt die Aufgabe zu Grunde, eine Schleifvorrichtung für ein eigenständiges und separat verwendbares Schleifgerät bereitzustellen, mit dem die Bearbeitung von Bodenbelägen in deren Randbereichen, insbesondere benachbart zu Wänden, zu einem hochwertigen Bearbeitungsergebnis führt und das als Nachrüstsatz ausgebildet sein kann.

Gelöst wird diese Aufgabe durch eine Schleifvorrichtung mit den Merkmalen des Anspruchs 1. Vorteilhafte sowie bevorzugte Ausgestaltungen der Erfindung sind Gegenstand der weiteren Ansprüche und werden im Folgenden näher erläutert.

Erfindungsgemäß weist eine Handhabungsvorrichtung für ein eigenständiges und separat verwendbares Schleifgerät mit einem motorisch angetriebenen Schleifwerkzeug, vorzugsweise einer Schleifscheibe, insbesondere für die Handhabung eines Winkelschleifers zum Bearbeiten von Bodenbelägen, ein Basiselement mit einer Aufnahme für das Schleifgerät sowie mit wenigstens einer Tariervorrichtung für das Ausrichten der Handhabungsvorrichtung relativ zur Waagerechten auf. Ein Wirkbereich des Schleifgerätes ist im Wesentlichen parallel zu einer Mittellängsachse des Basiselements ausgerichtet und eine Winkellage des Wirkbereichs ist zu dem zu bearbeitenden Bodenbelag mittels der Tariervorrichtung einstellbar. Auf diese Weise wird unter anderem vorteilhaft erreicht, dass eine handelsübliche Schleifmaschine als das hier genannte Schleifgerät verwendet werden kann. Durch die Tariervorrichtung und die damit mögliche Ausrichtung der Handhabungsvorrichtung, insbesondere des Schleifwerkzeugs, in der Winkellage relativ zum zu bearbeitenden Bodenbelag wird eine gleichmäßige Bearbeitung dieses Bodenbelages ermöglicht. Durch die immer gleichbleibende Winkellage des Schleifwerkzeugs kann eine Bedienperson das Schleifgerät mittels der Handhabungsvorrichtung gleichmäßig über den zu bearbeiteten Bodenbelag führen, ohne dass zu befürchten ist, dass das Schleifwerkzeug durch ein ungleichmäßiges und unregelmäßiges Aufdrücken auf dem Bodenbelag Riefen in dem Bodenbelag hinterlässt.

Die hier in Frage kommenden Bodenbeläge sind insbesondere Steinplatten, die nach dem Verlegen angeglichen, überschliffen oder poliert werden sollen. Möglich ist aber auch eine Anwendung der erfindungsgemäßen Handhabungsvorrichtung für andere Bodenbeläge, beispielsweise aus Beton, Estrich, Holz, Linoleum oder dergleichen. Als erfindungsgemäße Tariervorrichtung wird eine Anordnung verstanden, mittels der ein Ausrichten des Basiselementes relativ zu einem zu bearbeiteten Bodenbelag ermöglicht ist. Dies kann beispielsweise mechanisch, elektrisch, hydraulisch, pneumatisch oder dergleichen erfolgen. Bevorzugt ist eine möglichst einfache, dabei aber genaue Verstellbarkeit realisiert. Als Wirkbereich des Schleifgerätes wird erfindungsgemäß der Bereich verstanden, in dem das Schleifwerk seine abrasive Wirkung erzeugt, also üblicherweise der Bodenbelag.

In Ausgestaltung der Erfindung sind an dem Basiselement zwei unabhängig voneinander einstellbare Tariervorrichtungen zur Bildung einer Dreipunktauflage gemeinsam mit dem Schleifwerkzeug vorgesehen. Auf diese Weise wird eine möglichst genaue und dabei stabile Einstellbarkeit, also Tarierbarkeit, der Handhabungsvorrichtung bereitgestellt. Die drei Auflagepunkte sind zur Bearbeitung von Bodenbelägen in einer größeren Fläche innerhalb eines Raumes im Wesentlichen in einer gemeinsamen Ebene angeordnet. Um auf einzelne Bereiche des Schleifwerkzeugs beim Schleifen gezielt mehr oder weniger Kraft ausüben zu können, können einer oder beide Auflagepunkte der Tariervorrichtungen geringfügig oberhalb und/oder unterhalb der gemeinsamen Ebene angeordnet sein. Desweiteren können die Auflagepunkte der Dreipunktauflage auch in im Wesentlichen parallelen aber zueinander beabstandeten Ebene angeordnet sein, um beispielsweise Treppenstufen, Versatz im Verlauf eines Bodens oder dergleichen bearbeiten zu können. Dann sind beispielsweise einer oder beide Auflagepunkte der Tariervorrichtung auf einer unteren Ebene beispielsweise unteren Treppenstufe oder Treppenabsatz angeordnet und der Auflagepunkt des Schleifwerkzeugs auf einer darüber liegenden Ebene beispielsweise einem darüber liegenden Treppenstufe oder Treppenabsatz.

In Weiterbildung der Erfindung weist eine Tariervorrichtung eine mit dem Basiselement verbundene Gewindebuchse, einen länglichen, mit der Gewindebuchse in Eingriff stehenden Stab mit einem Gewindeabschnitt sowie eine Rollenanordnung an einem Ende des Stabes auf. In einfacher Weise ist so durch Ein- bzw. Ausdrehen des Stabes in bzw. aus der Gewindebuchse heraus eine Einstellmöglichkeit erreicht. Mittels der Rollenanordnung, die eine oder mehrere Rollen, Walzen, Räder oder dergleichen aufweisen kann, die um eine Hochachse senkrechte zu dem zu bearbeiteten Bodenbelag verdrehbar sein können, wird die Handhabung der Handhabungsvorrichtung zusätzlich vereinfacht. Der Gewindeabschnitt des Stabes kann sich über lediglich einen Teil des Stabes erstrecken, oder über den gesamten Stab. In letzterem Fall kann beispielsweise ein Gewindestab Anwendung finden. Eine Mindestlänge des Stabes richtet sich unter anderem danach, ob die Auflagepunkte der Dreipunktauflage in einer gemeinsamen oder in verschiedenen Ebenen. Beim Bearbeiten von Treppenstufen ist es vorteilhaft, wenn die Stäbe die Höhe einer Treppenstufe überspannen. Bei der Bearbeitung einer ebenen Fläche eines Raumes werden lediglich kürzere Stäbe benötigt. Erfindungsgemäß können die kürzeren Stäbe mittels eines Verlängerungsstücks verlängert werden. Aber auch eine teleskopartige Verlängerung ist im Rahmen der Erfindung möglich.

In Weiterbildung der Erfindung ist der Stab der Tariervorrichtung gegen ungewolltes Ein- und/oder Ausdrehen bzw. Ein- und/oder Ausziehen aus der Gewindebuchse oder dergleichen gesichert, vorzugsweise mittels einer Kontermutter, einer Klemmung oder dergleichen. Es hat sich gezeigt, dass die beim Bearbeitungsvorgang auftretenden Vibrationen die Einstellung der Tariervorrichtung verändern können. Ein gleichmäßiges Ergebnis wird also durch die Sicherung unterstützt. Die für die Sicherung verwendete Vorrichtung kann beispielsweise eine Kontermutter, eine Rändelmutter oder dergleichen sein. Für die vereinfachte Bedienung der Sicherungsvorrichtung kann beispielsweise eine zusätzliche Hebelanordnung vorgesehen sein, die eine Freilaufposition und eine Wirkposition einnehmen kann. Mittels der Freilaufposition kann der Hebel in eine für einen Benutzer einfach zugängliche Position bzw. in eine für einen Benutzer nicht störende Position überführt werden. In der Benutzungsposition greift der Hebel an dem Sicherungselement an, sodass eine entsprechende Sicherung erzeugt werden kann.

Das Basiselement ist im Wesentlichen plattenförmig, vorzugsweise aus einem Blech, wobei vorzugsweise eine Außenkontur des Basiselements in den Bereich, in dem das Schleifwerkzeug angeordnet ist, zumindest abschnittsweise innerhalb der Auβenkontur des Schleifwerkzeugs angeordnet ist, wobei sich die Außenkontur des Basiselements in dem vom Schleifwerkzeug wegführenden Verlauf des Basiselements verbreitert. Das Basiselement kann beispielsweise gestanzt, gefräst, gelasert oder dergleichen sein. Neben dem genannten (Metall-)Blech kann das Basiselement auch zumindest abschnittsweise aus einem Kunststoff hergestellt sein, beispielsweise mittels Spritzguss oder dergleichen, und weist dann bevorzugt noch zusätzliche Verstärkungsrippen oder dergleichen auf.

Dadurch, dass eine Außenkontur des Basiselements in dem Bereich, in dem das Schleifwerkzeug angeordnet ist, zumindest abschnittsweise innerhalb der Außenkontur des Schleifwerkzeugs angeordnet ist, kann das Schleifwerkzeug bis auf einen sehr geringen Abstand an eine Wand herangeführt werden, die sich in einem Bearbeitungsbereich eines zu bearbeiteten Bodenbelages an diesem Bodenbelag direkt anschließt. Durch die sich verbreiternde Außenkontur des Basiselements in seinem vom Schleifwerkzeug wegführenden Verlauf wird die Standstabilität der Dreipunktauflage erhöht.

In Weiterbildung der Erfindung stützt die Aufnahme das Schleifgerät in einem Bereich zwischen Basiselement und Schleifgerät und/oder fixiert das Schleifgerät in einem Bereich zwischen Basiselement und Schleifgerät in seiner Position relativ zum Basiselement, wobei die Aufnahme das Schleifgerät insbesondere bogenförmig umgreift und wobei die Aufnahme in einem vom Schleifwerkzeug abgewandten Bereich des Basiselements angeordnet ist. Die stützende Eigenschaft der Aufnahme kann beispielsweise durch Unterfüttern, Abstandshalter oder dergleichen zwischen Basiselement und Schleifgerät erzeugt werden. Das Fixieren, das bevorzugt zusätzlich zu einem ersten, anderen fixierenden Bereich des Schleifgerätes an dem Basiselement im Bereich des Schleifwerkzeuges vorgesehen ist, erhöht die gesamte Stabilität der Handhabungsvorrichtung mit eingesetztem Schleifgerät.

In Weiterbildung der Erfindung weist die Handhabungsvorrichtung, vorzugsweise die Aufnahme, wenigstens in einem vom zu bearbeitenden Bodenbelag abgewandten Bereich des Schleifgerätes eine Auflagefläche auf, insbesondere für eine Hand und/oder einen Arm eines Benutzers, wobei die Auflage vorzugsweise entsprechend des darauf abzulegenden Körperteils geformt ist. Ein ermüdungsfreies Arbeiten sowie eine vereinfachte Handhabbarkeit der Vorrichtung wird auf diese Weise unterstützt. Die Auflagefläche kann gepolstert sein, beispielsweise mit Schaumstoff, Neopren oder dergleichen, wodurch eine gegebenenfalls als unangenehm empfundene Übertragung von Vibrationen von der Handhabungsvorrichtung zu einer Bedienperson deutlich verringert wird.

In Ausgestaltung der Erfindung ist wenigstens eine sogenannte Libelle vorgesehen, insbesondere im Sichtfeld eines Benutzers, beispielsweise zwei orthogonal zueinander ausgerichtete Libellen und/oder eine Kreislibelle an einer dem Benutzer zugewandten Oberfläche der Aufnahme und/oder des Basiselements. Die Libelle ermöglicht es dem Benutzer als optisches Anzeigeelement zu erkennen, ob bzw. wie die Handhabungsvorrichtung tariert ist. Auch erkennt der Benutzer mittels der Libelle/Libellen einen Abnutzungsgrad des Schleifwerkzeuges, da sich ja die Höhe eines Schleifwerkzeuges mit dessen Abnutzung verringert und somit die Tarierung ändert.

In Weiterbildung der Erfindung ist eine Absaugvorrichtung vorgesehen, die mit dem Basiselement und/oder dem Schleifgerät verbunden ist und die das Schleifwerkzeug zumindest in dem dem Benutzer zugewandten Bereich umgibt. Die Absaugvorrichtung ist vorzugsweise glockenförmig und zumindest teilweise über das Schleifgerät gestülpt. Diese Absaugglocke ist dann mit einer ein Unterdruck erzeugenden Vorrichtung verbunden, beispielsweise einem Staubsauger oder dergleichen. Eine derartige Absaugvorrichtung verbessert nicht nur die Sicht- und Atembedingungen für einen Benutzer, also die Arbeitsbedingungen, sondern kann außerdem auch noch als Abstandshalter oder dergleichen zu einer zu dem zu bearbeiteten Bodenbelag benachbarten Wand verwendet werden.

Die der Erfindung zu Grunde liegende Aufgabe wird durch eine Schleifvorrichtung mit einer Handhabungsvorrichtung gemäß vorstehender Beschreibung gelöst, wobei eine derartige Handhabungsvorrichtung ein eigenständiges und separat verwendbares Schleifgerät aufweist, insbesondere einen Winkelschleifer. Das Schleifwerkzeug ist auf einer dem zu bearbeitenden Bodenbelag zugewandten Seite des Basiselements angeordnet und das übrige Schleifgerät ist im Wesentlichen vollständig auf der von dem zu bearbeitenden Bodenbelag abgewandten Seite des Basiselements angeordnet. Eine Antriebsachse des Schleifgerätes durchtritt das Schleifgerät von einer dem Schleifgerät zugewandten Seite des Basiselements bis zu einer von dem Schleifgerät abgewandten Seite des Basiselements, wobei die Antriebsachse auf der dem Schleifgerät abgewandten Seite der Basisplatte mit dem Schleifwerkzeug in Eingriff steht. Das Schleifgerät ist länglich und dessen Längsachse ist zumindest bei Benutzung der Schleifvorrichtung mit dem Basiselement im wesentlichen parallel zu dem zu bearbeitenden Bodenbelag ausgerichtet.

Diese und weitere Merkmale gehen außer aus den Ansprüchen auch aus der Beschreibung und den Zeichnungen hervor. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Eine Ausführungsform der Erfindung ist in den Zeichnungen schematisch dargestellt und wird im Folgenden näher erläutert. Teilweise werden Merkmale nur im Zusammenhang mit einer einzelnen Figur beschriebenen. Die Merkmale können jedoch, ohne den Rahmen der Erfindung zu verlassen, beliebig miteinander kombiniert werden. In den Zeichnungen zeigen:
- Fig.1: eine Seitenansicht der erfindungsgemäßen Handhabungsvorrichtung mit daran montiertem Schleifgerät in Benutzung,
- Fig.2: eine Seitenansicht der erfindungsgemäßen Handhabungsvorrichtung und
- Fig.3: eine Draufsicht der erfindungsgemäßen Handhabungsvorrichtung gemäß Fig.2 mit strichliniert angedeutetem Schleifgerät.

### Detaillierte Beschreibung der Zeichnungen

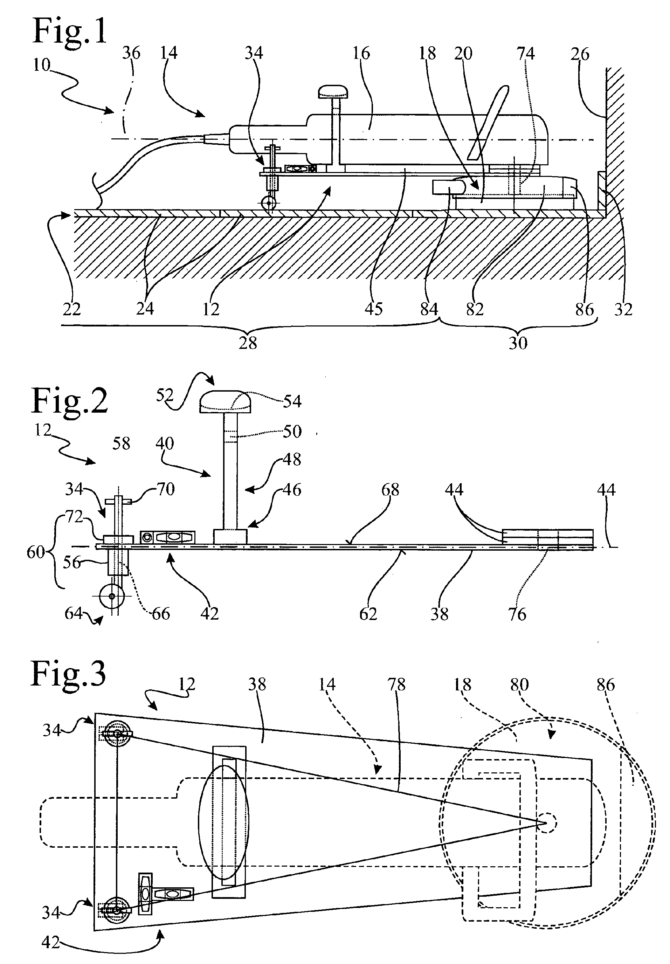

In Fig. 1 ist eine erfindungsgemäße Schleifvorrichtung 10 mit einer Handhabungsvorrichtung 12 sowie mit daran montiertem Schleifgerät 14 gezeigt. Das Schleifgerät 14 ist ein separat verwendbarer und eigenständiger Winkelschleifer 16 mit einem Schleifwerkzeug 18, das hier eine diamantbesetzte Schleifscheibe 20 ist.

Die Schleifvorrichtung 10 ist in Fig. 1 bei der Bearbeitung eines zu bearbeitenden, hier eines zu schleifenden, Bodenbelages 22 dargestellt, der aus Stein 24 besteht. Dieser Bodenbelag 22 ist gemäß Fig. 1 in einem ersten, von einer Wand 26 entfernten Bereich 28 bereits mit einer herkömmlichen, dem Fachmann bekannten Schleifenmaschine überarbeitet. Der unbearbeitete Bereich 30 des Bodenbelages 22 schließt direkt an die Wand 26 an. Dieser Bereich 30 lässt sich durch herkömmliche Schleifmaschinen, die hier nicht dargestellt sind, nur unzureichend gut bearbeiten. Insbesondere besteht die Gefahr, dass Sockelleisten 32 durch derartige Schleifmaschinen beschädigt werden. Da die erfindungsgemäße Schleifvorrichtung 10 zum Einen einen kürzeren Hebel zwischen Wirkbereich und Angriffspunkten eines Benutzers und zum Anderen eine geringere Leistung als herkömmliche Schleifgeräte aufweist, wird die Qualität des Schliffs im Bereich 30 verbessert. Zusätzlich verbessert wird die Qualität noch dadurch, dass die Handhabungsvorrichtung 12 eine Tariervorrichtung 34 aufweist, mit der ein Verschwenken der Schleifvorrichtung 10 um eine Achse, die parallel zur Mittellängsachse 36 des Schleifgerätes 14 verläuft, ermöglicht ist.

Das Schleifwerkzeug 18 ist von einer Absaugvorrichtung 82 mit einem Anschluss 84 für ein Sauggerät umgeben. Die Absaugvorrichtung 82 ist glockenförmig ausgebildet und weist einen entfernbaren Abschnitt 86 auf. Mittels der Absaugvorrichtungen 82 wird beim Schleifvorgang erzeugter Schleifstaub abgesaugt. Durch den entfernbaren Abschnitt 86, der ein Kreissegment der Glockenform der Absaugvorrichtung 82 ist, kann mit der Schleifscheibe 20 bis direkt an die Sockelleiste 32 heran gearbeitet werden.

In Fig. 2 ist eine Seitenansicht der erfindungsgemäßen Handhabungsvorrichtung 12 dargestellt. Die Handhabungsvorrichtung 12 weist ein Basiselement 38, eine Aufnahme 40 für das hier nicht dargestellte Schleifgerät sowie die Tariervorrichtungen 34 auf. An dem Basiselement, das plattenartig ausgebildet ist, sind T-förmig angeordnete Libellen 42 montiert, von denen eine parallel zu einer Längsachse 43 des Basiselementes 38 und eine senkrecht zu dieser Längsachse 43 ausgerichtet ist. Weiterhin sind an dem Basiselement 38 Ausgleichsplatten 44 angeordnet, mittels derer, sofern notwendig, ein Abstand zwischen dem Schleifgerät und dem Basiselement 38 ausgeglichen werden kann.

Die Aufnahme 40 weist einen Sockelbereich 46 auf, der einem Abstand entsprechend ausgebildet ist, der mit den Ausgleichsplatten 44 ausgeglichen werden soll. Er dient als Unterfütterung in einem Bereich 45 zwischen Schleifgerät und Basisplatte und kann an ein bestimmtes Schleifgerät angepasst sein, oder im Wesentlichen universell verwendbar sein, beispielsweise in Form zweier Schraubenköpfe oder dergleichen.

Die Aufnahme 40 ist, wie in Zusammenschau mit der Fig. 3 noch besser ersichtlich wird, im Wesentlichen bogenförmig ausgebildet, sodass in deren Mittelbereich 48 eine Ausnehmung für ein hier nicht gezeigtes Schleifgerät 14 gebildet ist. Dieser Mittelbereich 48 wird in seinem vom Basiselement 38 abgewandten Endbereich von einer Querstrebe 50 begrenzt. Die Aufnahme 40 kann in einer geeigneten, hier nicht näher dargestellten Weise geöffnet werden, um das zu verwendende Schleifgerät einzusetzen und zu fixieren. Die Aufnahme 40 weist in ihrem von dem Basiselement 38 abgewandten Endbereich eine Auflage 52 auf mit einer Auflagefläche 54 für die Auflage eines Körperteils eines Benutzers, hier insbesondere eines Unterarmes.

Die Tariervorrichtung 34 weist eine Gewindebuchse 56 auf, die drehfest mit dem Basiselement 38 verbunden ist. Weiterhin weist die Tariervorrichtung einen Stab 58 mit einem Gewindeabschnitt 60 auf. In dem Endbereich des Stabes 58, der auf einer dem Schleifgerät abgewandten Seite 62 des Basiselementes angeordnet ist, weist er eine Rollenanordnung 64 auf. Die Rollenanordnung 64 ist um eine Hochachse 66 des Stabes 58 drehbar. In dem Endbereich des Stabes 58, der sich auf einer einem Schleifgerät zugewandten Seite 68 des Basiselementes 38 befindet, ist er mit einer Hantiervorrichtung 70 versehen. Mit dieser kann der Stab 58 in die Gewindebuchse 56 eingedreht bzw. aus dieser herausgedreht werden. Die Höheneinstellung der Tariervorrichtung 34 kann mittels einer Sicherungsvorrichtung 72, die hier eine Rändelmutter ist, gegen ungewolltes Verstellen gesichert werden.

Wie aus der Zusammenschau der Fig. 2 mit der Fig. 1 ersichtlich wird, durchtritt eine Antriebsachse 74 des Schleifgerätes 14 das Basiselement 38 von der Seite 68 zur Seite 62 über eine Ausnehmung 76 im Basiselement 38.

Die Fig. 3 zeigt eine Draufsicht der erfindungsgemäßen Handhabungsvorrichtung 12 gemäß Fig. 2 mit strichliniert angedeutetem Schleifgerät 14. Es ist zu erkennen, dass die Tariervorrichtungen 34 sowie das Schleifwerkzeug 18 ein Dreieck 78 bilden. Daraus ergibt sich eine Dreipunktauflage der gesamten Schleifvorrichtung 10 auf einem zu bearbeitenden Bodenbelag. Mittels der beiden Tariervorrichtungen 34, die ja in dem von dem Schleifwerkzeug 18 abgewandten Endbereich des Basiselementes 38 angeordnet sind, lässt sich die Handhabungsvorrichtung 12, und somit die Schleifvorrichtung 10, im Winkel zum zu bearbeitenden Bodenbelag einstellen, sodass ein Wirkbereich 80 des Schleifwerkzeuges 18 angestellt werden kann. Die Einstellmöglichkeiten des Wirkbereiches beziehen sich wenigstens auf dessen Winkellage zum zu bearbeitenden Bodenbelag, also dessen Kontaktfläche, die sich durch Verkippen des Schleifwerkzeuges ergibt, sowie auf den Anpressdruck des Schleifwerkzeugs. Die vorgenommenen Einstellungen werden einem Benutzer mittels der Libellen 42 dargestellt.

## Patentansprüche

1. Schleifvorrichtung mit einer Handhabungsvorrichtung (12) für ein eigenständiges und separat verwendbares Schleifgerät(14) mit einem motorisch angetriebenen Schleifwerkzeug (18), vorzugsweise einer Schleifscheibe (20), zum Bearbeiten von Bodenbelägen (22, 24), wobei die Handhabungsvorrichtung (12) ein Basiselement (38) mit einer Aufnahme (40) für das Schleifgerät (14) sowie mit wenigstens einer Tariervorrichtung (34) für das Ausrichten der Handhabungsvorrichtung (12) relativ zur Waagerechten aufweist, wobei ein Wirkbereich des Schleifgerätes (14) im Wesentlichen parallel zu einer Mittellängsachse (36) des Basiselementes (38) ausgerichtet ist und eine Winkellage des Wirkbereichs (80) zu dem zu bearbeitenden Bodenbelag (22) mittels der Tariervorrichtung (34) einstellbar ist, und mit einem solchen Schleifgerät (14), **dadurch gekennzeichnet, dass** das Basiselement (38) im wesentlichen plattenförmig ist und dass das.Schleifwerkzeug (18) auf einer dem zu bearbeitenden Bodenbelag (22) zugewandten Seite (62) des Basiselements (38) angeordnet ist und dass das übrige Schleifgerät (14) im Wesentlichen vollständig auf der von dem zu bearbeitenden Bodenbelag (22) abgewandten Seite (68) des Basiselements (38) angeordnet ist.

2. Schleifvorrichtung nach Anspruch 1, **dadurch gekennzeichnet, dass** eine Antriebsachse (74) des Schleifgerätes (14) von einer dem Schleifgerät (14) zugewandten Seite (62) des Basiselements (38) bis zu einer von dem Schleifgerät (14) abgewandten Seite (69) des Basiselements (38) durchtritt, wobei die Antriebsachse (74) auf der dem Schleifgerät (14) abgewandten Seite (62) der Basisplatte (38) mit dem Schleifwerkzeug (18) in Eingriff steht.

3. Schleifvorrichtung nach einem der vorhergehenden Ansprüche, **dadurch gekennzeichnet, dass** das Schleifgerät (14) länglich ist und dass dessen Längsachse (36) zumindest bei Benutzung der Schleifvorrichtung (10) im Wesentlichen parallel zu dem zu bearbeitenden Bodenbelag (22) beziehungsweise dem Basiselement (38) ausgerichtet ist.

4. Schleifvorrichtung nach einem der vorhergehenden Ansprüche, **dadurch gekennzeichnet, dass** an dem Basiselement (38) zwei unabhängig voneinander einstellbare Tariervorrichtungen (34) zur Bildung einer Dreipunktauflage zusammen mit dem Schleifwerkzeug (18) vorgesehen sind.

5. Schleifvorrichtung nach einem der vorhergehenden Ansprüche, **dadurch gekennzeichnet, dass** eine Tariervorrichtung (34) eine mit dem Basiselement (34) verbundene Gewindebuchse (56), einen länglichen, mit der Gewindebuchse (56) in Eingriff stehenden Stab (58) mit einem Gewindeabschnitt (60) sowie eine Rollenanordnung (64) an einem Ende des Stabs (58) aufweist.

6. Schleifvorrichtung nach Anspruch 5, **dadurch gekennzeichnet, dass** der Stab (58) der Tariervorrichtung (34) gegen ungewolltes Einund/oder Ausdrehen beziehungsweise Ein- und/oder Ausziehen aus der Gewindebuchse (56) gesichert ist, vorzugsweise mittels einer Kontermutter (72), einer Klemmung oder dergleichen.

7. Schleifvorrichtung nach Anspruch 6, **dadurch gekennzeichnet, dass** das Basiselement (38) im Wesentlichen plattenförmig ist aus einem Blech, wobei vorzugsweise eine Außenkontur des Basiselements (38) in dem Bereich, in dem das Schleifwerkzeug (18) angeordnet ist, zumindest abschnittsweise innerhalb einer Außenkontur des Schleifwerkzeugs (18) angeordnet ist, wobei sich die Außenkontur des Basiselements (38) in dem vom Schleifwerkzeug (18) wegführenden Verlauf des Basiselements (38) verbreitert.

8. Schleifvorrichtung nach einem der vorstehenden Ansprüche, **dadurch gekennzeichnet, dass** die Aufnahme (40) das Schleifgerät (14) in einem Bereich (45) zwischen Basiselement (38) und Schleifgerät (14) stützt und/oder in seiner Position relativ zum Basiselement (38) fixiert, insbesondere das Schleifgerät (14) bogenförmig umgreift, und dass die Aufnahme (40) auf einer vom Schleifwerkzeug (18) abgewandten Seite (68) des Basiselementes (38) angeordnet ist.

9. Schleifvorrichtung nach Anspruch 8, **dadurch gekennzeichnet, dass** die Handhabungsvorrichtung (12), vorzugsweise die Aufnahme (40), wenigstens in einem vom zu bearbeitenden Bodenbelag (22) abgewandten Bereich des Schleifgerätes (14) eine Auflage (52) mit Auflagefläche (54) aufweist, insbesondere für eine Hand und/oder einen Arm eines Benutzers, wobei die Auflage (52) vorzugsweise entsprechend des darauf aufzulegenden Körperteils geformt ist.

10. Schleifvorrichtung nach einem der vorstehenden Ansprüche, **dadurch gekennzeichnet, dass** wenigstens eine Libelle (42) vorgesehen ist, insbesondere im Sichtfeld eines Benutzers, vorzugsweise zwei orthogonal zueinander ausgerichtete Libellen (42) an einer dem Benutzer zugewandten Oberfläche der Aufnahme (52).

11. Schleifvorrichtung nach einem der vorstehenden Ansprüche, **dadurch gekennzeichnet, dass** eine Absaugvorrichtung (82) vorgesehen ist, die mit dem Basiselement (38) und/oder dem Schleifgerät (14) verbunden ist und die das Schleifwerkzeug (18) zumindest in den dem Benutzer zugewandten Bereichen umgibt.

## Claims

1. Sanding device having a manipulating device (12) for a self-contained and separately usable sanding machine (14) having a motor-driven sanding tool (18), preferably a sanding disc (20), for machining floor coverings (22, 24), wherein the manipulating device (12) has a base element (38) having a holder (40) for the sanding machine (14) and having at least one balancing device (34) for orienting the manipulating device (12) relative to the horizontal, wherein an active region of the sanding machine (14) is oriented substantially parallel to a longitudinal centre axis (36) of the base element (38) and an angular position of the active region (80) with respect to the floor covering (22) to be machined is settable by means of the balancing device (34), and having such a sanding machine (14), **characterized in that** the base element (38) is substantially plate-shaped, and **in that** the sanding tool (18) is arranged on a side (62), facing the floor covering (22) to be machined, of the base element (38), and **in that** the rest of the sanding machine (14) is arranged substantially entirely on that side (68) of the base element (38) that faces away from the floor covering (22) to be machined.

2. Sanding device according to Claim 1, **characterized in that** a drive axle (74) of the sanding machine (14) passes through from a side (68), facing the sanding machine (14), of the base element (38) to a side (62), facing away from the sanding machine (14), of the base element (38), wherein the drive axle (74) is engaged with the sanding tool (18) on that side (62) of the base plate (38) that faces away from the sanding machine (14).

3. Sanding device according to either of the preceding claims, **characterized in that** the sanding machine (14) is elongate, and **in that** the longitudinal axis (36) thereof is oriented substantially parallel to the floor covering (22) to be machined, or to the base element (38), at least when the sanding device (10) is used.

4. Sanding device according to one of the preceding claims, **characterized in that** two balancing devices (34), which are settable independently of one another, are provided on the base element (38) to form a three-point support together with the sanding tool (18).

5. Sanding device according to one of the preceding claims, **characterized in that** a balancing device (34) has a threaded bushing (56) connected to the base element (38), an elongate rod (58) which is engaged with the threaded bushing (56) and has a threaded section (60), and a roller arrangement (64) at one end of the rod (58).

6. Sanding device according to Claim 5, **characterized in that** the rod (58) of the balancing device (34) is secured against being screwed in and/or out or being pulled in and/or out of the threaded bushing (56) in an undesired manner, preferably by means of a lock nut (72), a clamp or the like.

7. Sanding device according to Claim 6, **characterized in that** the base element (38) is substantially plate-shaped and made of sheet metal, wherein preferably an outer contour of the base element (38) is arranged at least sectionally within an outer contour of the sanding tool (18) in the region in which the sanding tool (18) is arranged, wherein the outer contour of the base element (38) widens in the profile, leading away from the sanding tool (18), of the base element (38).

8. Sanding device according to one of the preceding claims, **characterized in that** the holder (40) supports the sanding machine (14) and/or fixes it in its position relative to the base element (38) in a region (45) between the base element (38) and the sanding machine (14), and in particular engages around the sanding machine (14) in an arcuate manner, and **in that** the holder (40) is arranged on a side (68), facing away from the sanding tool (18), of the base element (38).

9. Sanding device according to Claim 8, **characterized in that** the manipulating device (12), preferably the holder (40), has a support (52) having a supporting surface (54), in particular for a hand and/or an arm of a user, at least in a region, facing away from the floor covering (22) to be machined, of the sanding machine (14), wherein the support (52) is formed preferably in a manner corresponding to the body part to be supported thereon.

10. Sanding device according to one of the preceding claims, **characterized in that** at least one spirit level (42) is provided, in particular in the field of view of a user, preferably two spirit levels (42) oriented at right angles to one another, on a surface, facing the user, of the holder (52).

11. Sanding device according to one of the preceding claims, **characterized in that** a suction device (82) is provided, which is connected to the base element (38) and/or the sanding machine (14) and which surrounds the sanding tool (18) at least in the regions facing the user.

## Revendications

1. Dispositif de ponçage avec un dispositif de manipulation (12) pour une meuleuse autonome et utilisable séparément (14), avec un outil de ponçage (18) entraîné par un moteur, de préférence une meule (20), pour le traitement de revêtements de sol (22, 24), dans lequel le dispositif de manipulation (12) présente un élément de base (38) avec un système de réception (40) pour la meuleuse (14) ainsi qu'avec au moins un dispositif de tarage (34) pour l'orientation du dispositif de manipulation (12) par rapport à l'horizontale, dans lequel une zone active de la meuleuse (14) est orientée essentiellement parallèlement à un axe longitudinal central (36) de l'élément de base (38) et une position angulaire de la zone active (80) par rapport au revêtement de sol à traiter (22) est réglable au moyen du dispositif de tarage (34), et avec une meuleuse (14) de ce type, **caractérisé en ce que** l'élément de base (38) est réalisé essentiellement en forme de plaque et **en ce que** l'outil de ponçage (18) est disposé sur une face (62) de l'élément de base (38) tournée vers le revêtement de sol à traiter (22), et **en ce que** le reste de la meuleuse (14) est disposé essentiellement complètement sur la face (68) de l'élément de base (38) située à l'opposé du revêtement de sol à traiter (22).

2. Dispositif de ponçage selon la revendication 1, **caractérisé en ce qu'**un axe d'entraînement (74) de la meuleuse (14) traverse depuis une face (68) de l'élément de base (38) tournée vers la meuleuse (14) jusqu'à une face (62) de l'élément de base (38) située à l'opposé de la meuleuse (14), dans lequel l'axe d'entraînement (74) est en prise avec l'outil de ponçage (18) sur la face (62) de la plaque de base (38) situé à l'opposé de la meuleuse (14).

3. Dispositif de ponçage selon l'une quelconque des revendications précédentes, **caractérisé en ce que** la meuleuse (14) est allongée et **en ce que** son axe longitudinal (36) est, au moins pendant l'utilisation du dispositif de ponçage (10), orienté essentiellement parallèlement au revêtement de sol à traiter (22) ou bien à l'élément de base (38).

4. Dispositif de ponçage selon l'une quelconque des revendications précédentes, **caractérisé en ce qu'**il est prévu sur l'élément de base (38) deux dispositifs de tarage (34) réglables indépendamment l'un de l'autre pour la formation d'un appui à trois points en combinaison avec l'outil de ponçage (18).

5. Dispositif de ponçage selon l'une quelconque des revendications précédentes, **caractérisé en ce qu'**un dispositif de tarage (34) présente une douille filetée (56) reliée à l'élément de base (38), une tige allongée (58) avec une partie filetée (60) se trouvant en prise avec la douille filetée (56) ainsi qu'un dispositif de roulement (64) à une extrémité de la tige (58).

6. Dispositif de ponçage selon la revendication 5, **caractérisé en ce que** la tige (58) du dispositif de tarage (34) est bloquée contre un vissage et/ou un dévissage involontaire ou un engagement et/ou une extraction involontaire hors de la douille filetée (56), de préférence au moyen d'un contre-écrou (72), d'un serrage ou analogue.

7. Dispositif de ponçage selon la revendication 6, **caractérisé en ce que** l'élément de base (38) est réalisé essentiellement en forme de plaque à partir d'une tôle, dans lequel un contour extérieur de l'élément de base (38) est disposé de préférence dans la région dans laquelle l'outil de ponçage (18) est disposé, au moins partiellement à l'intérieur d'un contour extérieur de l'outil de ponçage (18), dans lequel le contour extérieur de l'élément de base (38) s'élargit dans le profil de l'élément de base (38) qui s'éloigne de l'outil de ponçage (18).

8. Dispositif de ponçage selon l'une quelconque des revendications précédentes, **caractérisé en ce que** le système de réception (40) supporte la meuleuse (14) dans une région (45) située entre l'élément de base (38) et la meuleuse (14) et/ou la fixe dans sa position par rapport à l'élément de base (38), en particulier entoure la meuleuse (14) en forme d'arc, et **en ce que** le système de réception (40) est disposé sur une face (68) de l'élément de base (38) située à l'opposé de l'outil de ponçage (18).

9. Dispositif de ponçage selon la revendication 8, **caractérisé en ce que** le dispositif de manipulation (12), de préférence le système de réception (40), présente au moins dans une région de la meuleuse (14) située à l'opposé du revêtement de sol à traiter (22), un appui (52) avec une face d'appui (54), en particulier pour une main et/ou un bras d'un utilisateur, dans lequel l'appui (52) est façonné de préférence de façon correspondante à la partie du corps à y appuyer.

10. Dispositif de ponçage selon l'une quelconque des revendications précédentes, **caractérisé en ce qu'**il est prévu au moins un niveau à bulle (42), en particulier dans le champ de vision d'un utilisateur, de préférence deux niveaux à bulle (42) orientés de façon orthogonale l'un à l'autre, sur une surface du système de réception (52) tournée vers l'utilisateur.

11. Dispositif de ponçage selon l'une quelconque des revendications précédentes, **caractérisé en ce qu'**il est prévu un dispositif d'aspiration (82), qui est relié à l'élément de base (38) et/ou à la meuleuse (14) et qui entoure l'outil de ponçage (18) au moins dans les zones tournées vers l'utilisateur.
